# EUROPEAN PATENT SPECIFICATION

(11) **EP 2 419 812 B1**
(45) Date of publication and mention of the grant of the patent: **02.11.2016**
(21) Application number: 10765186.1
(22) Date of filing: 15.04.2010
(51) Int. Cl.: G06F 3/042

(54) **OPTICAL TOUCH SCREEN SYSTEMS USING REFLECTED LIGHT**
OTPISCHE BERÜHRUNGSBILDSCHIRMSYSTEME MIT REFLEKTIERTEM LICHT
SYSTÈMES D'ÉCRAN TACTILE OPTIQUE UTILISANT LA LUMIÈRE RÉFLÉCHIE

(30) Priority: 16.04.2009 US 169779 P; 22.04.2009 US 171464 P; 24.03.2010 US 317255 P
(43) Date of publication of application: 22.02.2012
(73) Proprietor: Neonode Inc., San Jose CA 95134 (US)
(72) Inventor: GOERTZ, Magnus, S-18132 Lidingo (SE); ERIKSSON, Thomas, Stockholm 115 23 (SE); SHAIN, Joseph, 76308 Rehovot (IL)
(74) Representative: Lavoix
(86) International application number: PCT/US2010/031248
(87) International publication number: WO 2010/121031

(56) References cited:
- WO-A2-2007/003196
- WO-A2-2008/004103
- US-A- 4 518 249
- US-A- 4 710 760
- US-A1- 2003 002 809
- US-A1- 2003 156 100
- US-A1- 2005 104 860
- US-A1- 2007 084 989
- US-A1- 2007 152 985
- US-A1- 2008 074 401
- US-A1- 2008 088 603
- US-A1- 2008 122 803
- US-A1- 2008 273 019
- US-A1- 2009 058 833

## Description

### FIELD OF THE INVENTION

The field of the present invention is light-based touch screens.

### BACKGROUND OF THE INVENTION

Many consumer electronic devices are now being built with touch sensitive screens, for use with finger or stylus touch user inputs. These devices range from small screen devices such as mobile phones and car entertainment systems, to mid-size screen devices such as notebook computers, to large screen devices such as check-in stations at airports.

Most conventional touch screen systems are based on resistive or capacitive layers. Such systems are not versatile enough to offer an all encompassing solution, as they are not easily scalable.

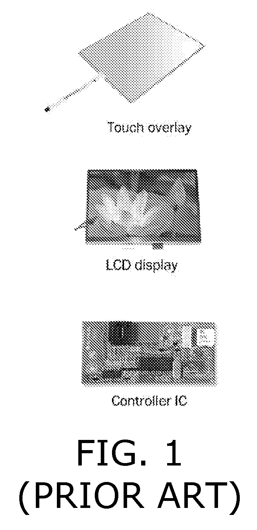

Reference is made to **FIG. 1****,** which is a prior art illustration of a conventional touch screen system. Such systems include an LCD display surface, a resistive or capacitive overlay that is placed over the LCD surface, and a controller integrated circuit (IC) that connects to the overlay and converts inputs from the overlay to meaningful signals. A host device (not shown), such as a computer, receives the signals from the controller IC, and a device driver or such other program interprets the signals to detect a touch-based input such as a key press or scroll movement.

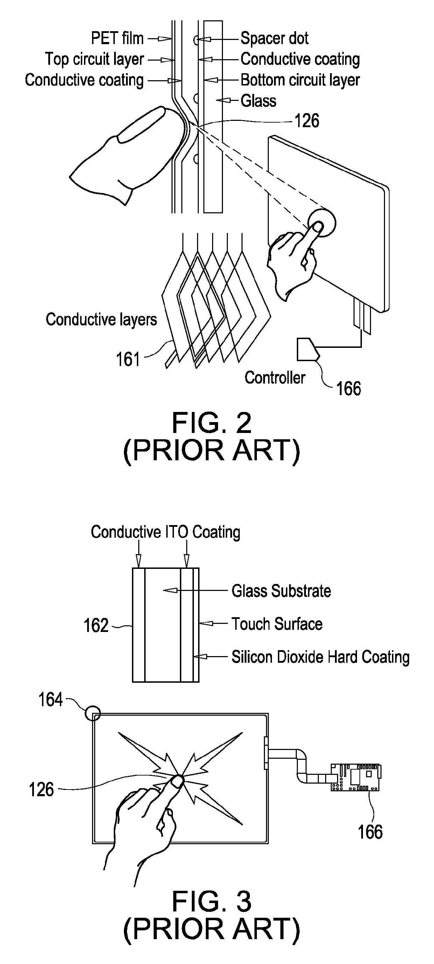

Reference is made to **FIG. 2****,** which is a prior art illustration of a conventional resistive touch screen. Shown in **FIG. 2** are conductive and resistive layers **161** separated by thin spaces. When a pointer **126,** such as a finger or a stylus, touches the screen, a contact is created between resistive layers, closing a switch. A controller **166** determines the current between layers to derive the position of the touch point.

Advantages of resistive touch screens are their low cost, low power consumption and stylus support.

A disadvantage of resistive touch screens is that as a result of the overlay, the screens are not fully transparent. Another disadvantage is that the screens require periodic re-calibration. Another disadvantage is that pressure is required for touch detection; i.e., a pointer that touches the screen without sufficient pressure goes undetected. As a consequence, resistive touch screens do not work well with fingers. Another disadvantage is that resistive touch screens are generally unreadable in direct sunlight. Another disadvantage is that resistive touch screens are sensitive to scratches. Yet another disadvantage is that resistive touch screens are unable to discern that two or more pointers are touching the screen simultaneously, referred to as "multi-touch".

Reference is made to **FIG. 3****,** which is a prior art illustration of a conventional surface capacitive touch screen. As shown in **FIG. 3****,** two sides of a glass substrate **162** are coated with a uniform conductive indium tin oxide (ITO) coating. In addition, a silicon dioxide hard coating is coated on the front side of one of the ITO coating layers. Electrodes 164 are attached at the four corners of the glass, for generating an electric current. A pointer **126,** such as a finger or a stylus, touches the screen, and draws a small amount of current to the point of contact. A controller **166** then determines the location of the touch point based on the proportions of current passing through the four electrodes.

Advantages of surface capacitive touch screens are finger touch support and a durable surface.

A disadvantage of surface capacitive touch screens is that as a result of the overlay, the screens are not fully transparent. Another disadvantage is a limited temperature range for operation. Another disadvantage is a limited capture speed of pointer movements, due to the capacitive nature of the touch screens. Another disadvantage is that surface capacitive touch screens are susceptible to radio frequency (RF) interference and electromagnetic (EM) interference. Another disadvantage is that the accuracy of touch location determination depends on the capacitance. Another disadvantage is that surface capacitive touch screens cannot be used with gloves. Another disadvantage is that surface capacitive touch screens require periodic re-calibration. Another disadvantage is that surface capacitive touch screens require a large screen border. As a consequence, surface capacitive touch screens cannot be used with small screen devices. Yet another disadvantage is that surface capacitive touch screens are unable to discern a multi-touch.

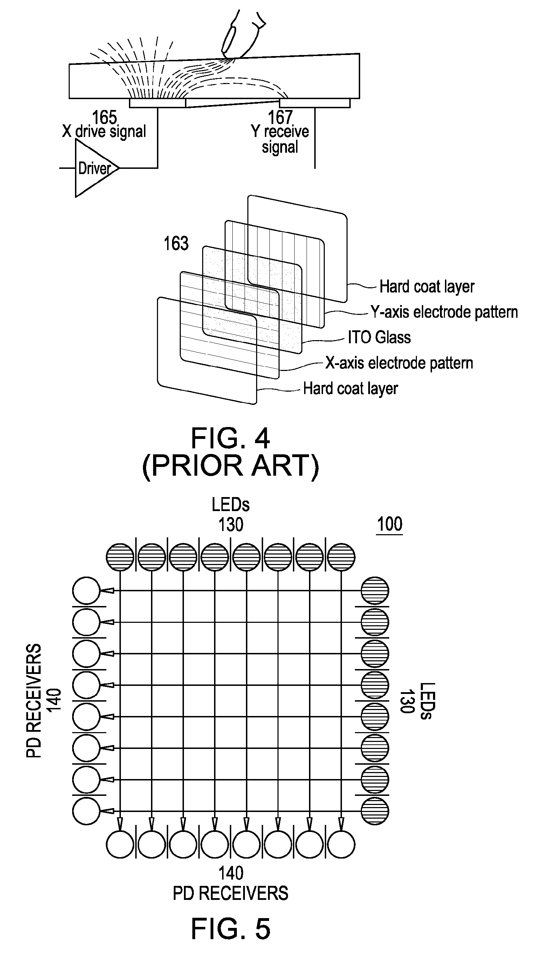

Reference is made to **FIG. 4****,** which is a prior art illustration of a conventional projective capacitive touch screen. Shown in **FIG. 4** are etched ITO layers **163** that form multiple horizontal (X-axis) and vertical (Y-axis) electrodes. AC signals **165** drive one axis and the response through the screen loops back via the other electrodes. Location of a pointer touching the screen is determined based on the signal level changes **167** between the horizontal and vertical electrodes.

Advantages of projective capacitive touch screens are finger multi-touch detection and a durable surface.

A disadvantage of projective capacitive touch screens is that as a result of the overlay, the screens are not fully transparent. Another disadvantage is their high cost. Another disadvantage is a limited temperature range for operation. Another disadvantage is a limited capture speed, due to the capacitive nature of the touch screens. Another disadvantage is a limited screen size, typically less than 5". Another disadvantage is that surface capacitive touch screens are susceptible to RF interference and EM interference. Yet another disadvantage is that the accuracy of touch location determination depends on the capacitance.

It will thus be appreciated that conventional touch screens are impractical for general use with small mobile devices and devices with large screens.

WO 2008/004103 A2 to Taktio ApS describes an optical touchpad that uses total internal reflection (TIR) to transmit electro-magnetic radiation through a screen cover and detect a touch location. The screen cover is a waveguide made up of two layers having different indices of refraction, namely, a signal layer and an intervening layer. Electro-magnetic radiation from an emitter enters the signal layer at an angle of incidence greater than the critical angle and is thus confined within this layer by TIR. Microstructures embedded in the waveguide between the signal and intervening layers refract the radiation at an angle less than the critical angle, such that the radiation passes out of the signal layer, through the intervening layer, to the screen surface where an object touching the screen surface scatters the radiation back into the waveguide. Microstructures refract a portion of the scattered radiation back into the signal layer, at an angle greater than the angle of incidence, so that this portion of the scattered radiation is directed through the signal layer by TIR to a detector. Based on one or more properties of the detected radiation, the system determines the location of the object on, or above, the screen.

### SUMMARY OF THE DESCRIPTION

The present invention provides a touch screen system and method therefor, according to the claims.

### BRIEF DESCRIPTION OF THE DRAWINGS

The present invention will be more fully understood and appreciated from the following detailed description, taken in conjunction with the drawings in which:
**FIG. 1** is a prior art illustration of a conventional touch screen system;
**FIG. 2** is a prior art illustration of a conventional resistive touch screen;
**FIG. 3** is a prior art illustration of a conventional surface capacitive touch screen;
**FIG. 4** is a prior art illustration of a conventional projective capacitive touch screen;
**FIG. 5** is a diagram of a touch screen having 16 LEDs and 16 PDs, in accordance with an embodiment of the present invention;
**FIGS. 6 - 8** are diagrams of a touch screen that detects two pointers that touch the screen simultaneously, in accordance with an embodiment of the present invention;
**FIGS. 9** and **10** are diagrams of a touch screen that detects a two finger glide movement, in accordance with an embodiment of the present invention;
**FIG. 11** is a circuit diagram of the touch screen from **FIG. 5****,** in accordance with an embodiment of the present invention;
**FIG. 12** is a diagram of a touch screen with four LEDs placed in the four corners of the screen, and plural PDs are arranged along the four sides of the screen, in accordance with an embodiment of the present invention;
**FIG. 13** is a simplified diagram of a touch screen system responsive to blocked light and reflected light, in accordance with an embodiment of the present invention;
**FIG. 14** is a simplified diagram of a touch screen system with selective area touch aligned with user interface buttons, in accordance with an embodiment of the present invention;
**FIG. 15** is a simplified diagram of another touch screen system with selective area touch, in accordance with an embodiment of the present invention;
**FIG. 16** is a simplified diagram of a touch screen system with reflective elements embedded in the screen, in accordance with an embodiment of the present invention;
**FIG. 17** is a simplified illustration of a touch screen system with embedded reflective elements, in accordance with an embodiment of the present invention;
**FIG. 18** is a simplified illustration of a touch screen system with a picture array that reads incoming light from spread locations, in accordance with an embodiment of the present invention;
**FIG. 19** is a simplified illustration of light from a pointer being reflected back into the touch screen of **FIG. 18****,** in accordance with an embodiment of the present invention;
**FIG. 20** is a simplified illustration of light from a display being reflected from a pointer back into the touch screen of **FIG. 18****,** in accordance with an embodiment of the present invention;
**FIG. 21** is a simplified illustration of a touch screen having detection points with reflective elements embedded in the screen glass, in accordance with an embodiment of the present invention;
**FIG. 22** is a simplified illustration of a light source positioned at a corner of the touch screen of **FIG. 21** that projects light into the screen glass, in accordance with an embodiment of the present invention;
**FIG. 23** is a simplified illustration of a touch screen that serves as a light conductor, for guiding light emitted by an LED, in accordance with an embodiment of the present invention;
**FIG. 24** is a simplified illustration of the touch screen of **FIG. 23** with microstructures embedded in the glass, in accordance with an embodiment of the present invention;
**FIG. 25** is a simplified illustration of reflected light being re-directed by a reflective element embedded in a touch screen and directed towards a photo detector, in accordance with an embodiment of the present invention;
**FIG. 26** is a simplified illustration of light that is reflected onto multiple areas of a touch screen and directed towards a photo detector, in accordance with an embodiment of the present invention;
**FIG. 27** is a simplified diagram of the touch screen system of **FIG. 21** with a camera that functions as a photo detector, in accordance with an embodiment of the present invention;
**FIGS. 28 - 35** are simplified illustrations of a camera lens capturing reflected light from the touch screen of **FIG. 21****,** with the camera at various distances away from a pointer that is touching the screen, and the corresponding images captured by the camera, in accordance with an embodiment of the present invention;
**FIG. 36** is a simplified diagram of a side view showing the sub-patterns in the camera sensor generated from the embedded reflective elements, in accordance with an embodiment of the present invention;
**FIGS. 37 - 43** are images of light beams reflected from three different pointer touch locations, in accordance with an embodiment of the present invention;
**FIGS. 44 - 46** are simplified illustrations of a simulation of light at multiple points on a touch screen, at which reflective elements are embedded, in accordance with an embodiment of the present invention;
**FIGS. 47** and **48** are simplified illustrations of light emitted from an LED lighting up a fingertip of 4 mm x 4 mm, for the touch screen of **FIG. 44****,** in accordance with an embodiment of the present invention; and
**FIGS. 49 - 51** are images of test results captured by a camera for the touch screen of **FIG. 44****,** in accordance with an embodiment of the present invention.

### DETAILED DESCRIPTION

Aspects of the present invention relate to light-based touch screens and light-based touch surfaces. According to embodiments of the present invention, a light-based touch screen includes one or more infra-red or near infra-red light-emitting diodes (LEDs) and a plurality of photodiodes (PDs) arranged along the perimeter surrounding the touch screen or touch surface. The LEDs project light substantially parallel to the screen surface, and this light is detected by the PDs. A pointer, such as a finger or a stylus, placed over a portion of the screen blocks some of the light beams, and correspondingly some of the PDs detect less light intensity. The geometry of the locations of the PDs, and the light intensities they detect, suffice to determine screen coordinates of the pointer. The LEDs and PDs are controlled for selective activation and de-activation by a controller. Generally, each LED and PD has I/O connectors, and signals are transmitted to specify which LEDs and which PDs are activated.

In an embodiment of the present invention, plural LEDs are arranged along two adjacent sides of a rectangular screen, and plural PDs are arranged along the other two adjacent sides. In this regard, reference is now made to **FIG. 5****,** which is a diagram of a touch screen **100** having 16 LEDs **130** and 16 PDs **140,** in accordance with an embodiment of the present invention. The LEDs **130** emit infra-red or near infra-red light beams across the top of the touch screen, which are detected by corresponding PD receivers that are directly opposite the LEDs. When a pointer touches touch screen **100,** it blocks light from reaching some of PD receivers **140.** By identifying, from the PD receiver outputs, which light beams have been blocked by the pointer, the pointer's location can be determined.

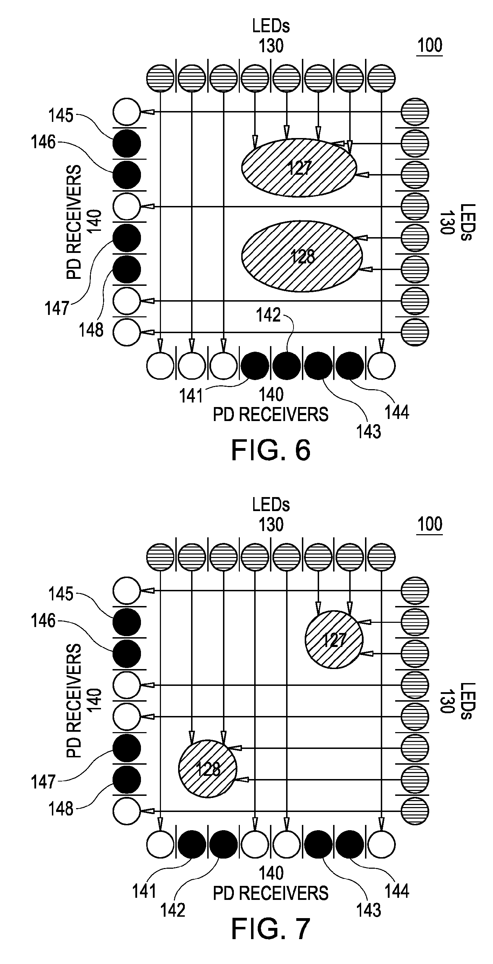

Reference is now made to **FIGS. 6 - 8****,** which are diagrams of a touch screen that detects two pointers, **127** and **128,** that touch the screen simultaneously, in accordance with an embodiment of the present invention. When two or more pointers touch the screen simultaneously, this is referred to as a "multi-touch." Pointers **127** and **128,** which are touching the screen, block light from reaching some of PD receivers **140.** In accordance with an embodiment of the present invention, the locations of pointers **127** and **128** are determined from the crossed lines of the infra-red beams that the pointers block. In distinction, prior art resistance-based and capacitance-based touch screens are generally unable to detect a multi-touch.

When two or more pointers touch screen **100** simultaneously along a common horizontal or vertical axis, the positions of the pointers are determined by the PD receivers **140** that are blocked. Pointers **127** and **128** in **FIG. 6** are aligned along a common vertical axis and block substantially the same PD receivers **140** along the bottom edge of touch screen **100;** namely the PD receivers marked **141,142,143** and **144.** Along the left edge of touch screen 100, two different sets of PD receivers **140** are blocked. Pointer **127** blocks the PD receivers marked **145** and **146,** and pointer **128** blocks the PD receivers marked **147** and **148.** The two pointers are thus determined to be situated at two locations. Pointer **127** has screen coordinates located at the intersection of the light beams blocked from PD receivers **141 -144** and PD receivers **145** and **146;** and pointer **128** has screen coordinates located at the intersection of the light beams blocked from PD receivers **141 -144** and PD receivers **147** and **148.**

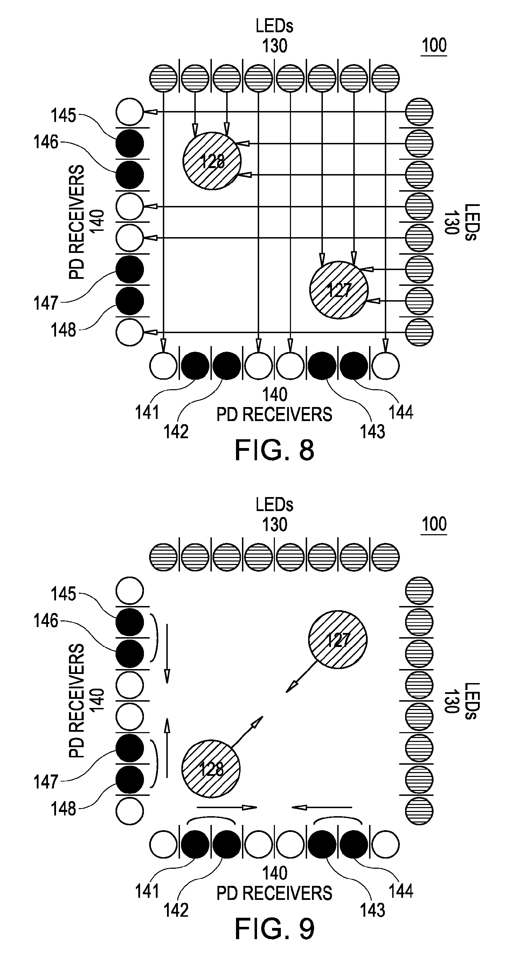

Pointers **127** and **128** shown in **FIGS. 7** and **8** are not aligned along a common horizontal or vertical axis, and they have different horizontal locations and different vertical locations. From the blocked PD receivers **141 -148,** it is determined that pointers **127** and **128** are diagonally opposite one another. They are either respectively touching the top right and bottom left of touch screen **100,** as illustrated in **FIG. 7****;** or else respectively touching the bottom right and top left of touch screen **100,** as illustrated in **FIG. 8****.**

Discriminating between **FIG. 7** and **FIG. 8** is resolved by either (i) associating the same meaning to both touch patterns, or (ii) by associating meaning to only one of the two touch patterns, or (iii) by measuring the amount of light detected at the blocked PDs. In case (i), the UI arranges its icons, or is otherwise configured, such that the effects of both touch patterns shown in **FIG. 7** and **FIG. 8** are the same. For example, touching any two diagonally opposite corners of touch screen **100** operates to unlock the screen.

In case (ii), the UI arranges its icons, or is otherwise configured, such that only one of the touch patterns shown in **FIG. 7** and **FIG. 8** has a meaning associated therewith. For example, touching the upper right and lower left corners of touch screen **100** operates to unlock the screen, and touching the lower right and upper left of touch screen **100** has no meaning associated therewith. In this case, the UI discriminates that the pattern shown in **FIG. 7** is the actual touch pattern.

In case (iii), a finger closer to a PD blocks more light from reaching the PD than does a finger that is farther from the PD. In part, this is due to the closer finger blocking more ambient light from reaching the PD than the farther finger. The light intensities at PDs **145** and **146** are compared with the light intensities detected at PDs **147** and **148.** Similarly, the light intensities detected at PDs **141** and **142** are compared with the light intensities detected at PDs **143** and **144.** If the light detected at PDs 145, **146** and at PDs **143** and **144** is greater than the light detected at PDs **147** and **148** and at PDs **141** and **142,** then it is inferred that the fingers are positioned as shown in **FIG. 7****.** Similarly, if the light detected at PDs **145** and **146** and at PDs **143** and **144** is less than the light detected at PDs **147** and **148** and at PDs **141** and **142,** then it is inferred that the fingers are positioned as shown in **FIG. 8****.** The comparison may be based on summing or averaging the respective blocked PDs along each edge separately, **145**+146 vs. 147+**148**, and **141**+142 vs. 143+144. Alternatively, the comparison may be based on summing or averaging blocked PDs along two edges; i.e., based on the maximum and minimum of the values **141**+142+145+146, 141+142+147+148, 143+144+145+146, and 143+144+147+148. The maximum and minimum values determine the locations of the fingers. E.g., if **143**+144+145+146 is the maximum value and if **141**+142+147+148 is the minimum value, then it is inferred that the fingers are positioned as shown in **FIG. 7****.**

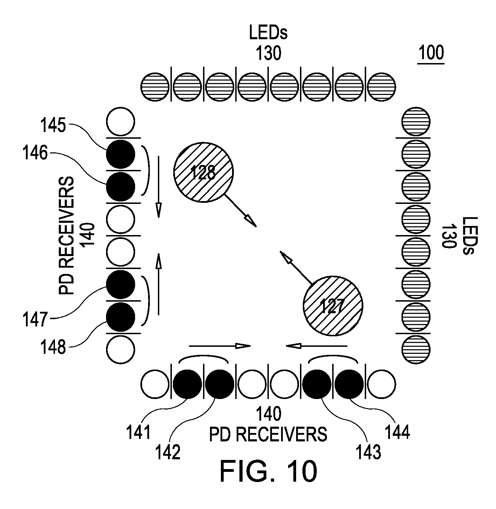

Reference is now made to **FIGS. 9** and **10****,** which are diagrams of a touch screen that detects a two finger glide movement, in accordance with an embodiment of the present invention. The glide movement illustrated in **FIGS. 9** and **10** is a diagonal glide that brings pointers **127** and **128** closer together. The direction of the glide is determined from changes in which PD receivers **140** are blocked. As shown in **FIGS. 9** and **10****,** blocked PD receivers are changing from **141** and **142** to PD receivers **140** more to the right, and from **143** and **144** to PD receivers **140** more to the left. Similarly, blocked PD receivers are changing from **145** and 146 to PD receivers **140** more to the bottom, and from **147** and 148 to PD receivers **140** more to the top. For a glide in the opposite direction, that moves pointers **127** and **128** farther apart, the blocked PD receivers change in the opposite directions.

When pointers **127** and **128** are aligned in a common vertical or horizontal axis, there is no ambiguity in identifying glide patterns. When pointers **127** and **128** are not aligned in a common vertical or horizontal axis, there may be ambiguity in identifying glide patterns, as illustrated in **FIGS. 9** and **10****.** In case of such ambiguity, and as described hereinabove with reference to **FIGS. 7** and **8****,** discriminating between **FIG. 9** and **FIG. 10** is resolved by either (i) by associating the same meaning to both glide patterns, or (ii) by associating meaning to only one of the two glide patterns, or (iii) by measuring and comparing the amounts of light detected at the blocked PDs.

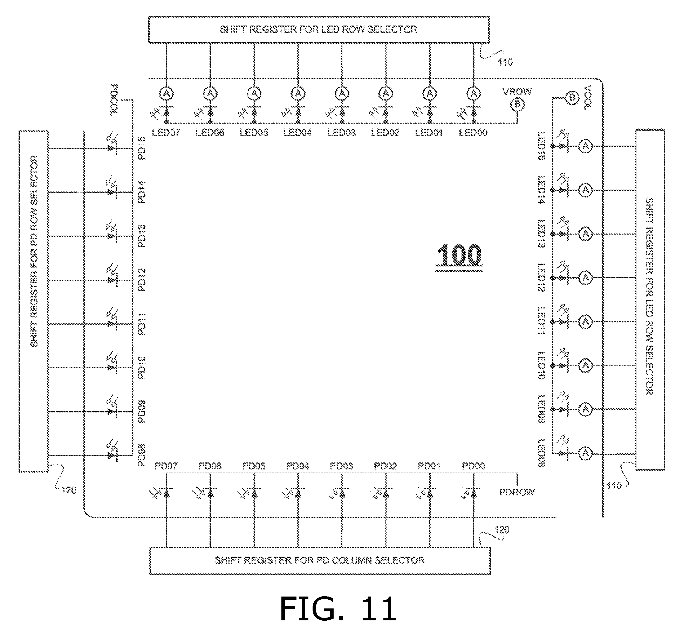

Reference is now made to **FIG. 11****,** which is a circuit diagram of touch screen **100** from **FIG.** 5, in accordance with an embodiment of the present invention. The LEDs **130** and PDs **140** are controlled by a controller (not shown). The LEDs receive respective signals *LED00 - LED15* from LED switches **A,** and receive current from *VROW* and *VCOL* through current limiters **B.** The PDs receive respective signals *PD00 - PD15* from shift register **120.** PD output is sent to the controller via signals *PDROW* and *PDCOL.* Operation of the controller, of LED switches **A** and of current limiters **B** is described in U.S. Application Serial No. 12/371,609 filed on February 15, 2009 and entitled LIGHT-BASED TOUCH SCREEN.

According to an embodiment of the present invention, the LEDs are controlled via a first serial interface, which transmits a binary string to a shift register **110.** Each bit of the binary string corresponds to one of the LEDs, and indicates whether to activate or deactivate the corresponding LED, where a bit value "1" indicates activation and a bit value "0" indicates deactivation. Successive LEDs are activated and deactivated by shifting the bit string within shift register **110.**

Similarly, the PDs are controlled by a second serial interface, which transmits a binary string to a shift register **120.** Successive PDs are activated and deactivated by shifting the bit string in shift register **120.** Operation of shift registers **110** and **120** is described in U.S. Application Serial No. 12/371,609 filed on February 15, 2009 and entitled LIGHT-BASED TOUCH SCREEN.

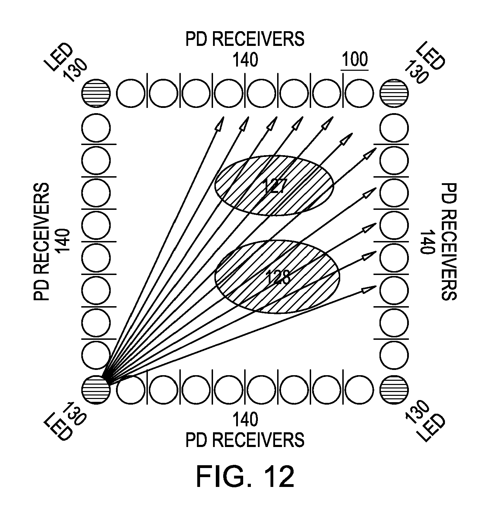

In distinction to the embodiment shown in **FIG. 5****,** in accordance with another embodiment of the present invention, four LEDs **130** are placed in the four corners of a touch screen, and plural PDs **140** are arranged along the four sides of the screen, as shown in **FIG. 12****.** When an LED **130** is lit, it projects an arc of light substantially parallel to the surface of the screen. The PDs **140** detect respective portions of this light, according to the positions of the LED **130** and the PDs **140.** The four LEDs **130** suffice to determine the screen coordinates of a pointer, such as a finger, placed over a portion of the screen, based on the light intensities detected by the PDs **140.**

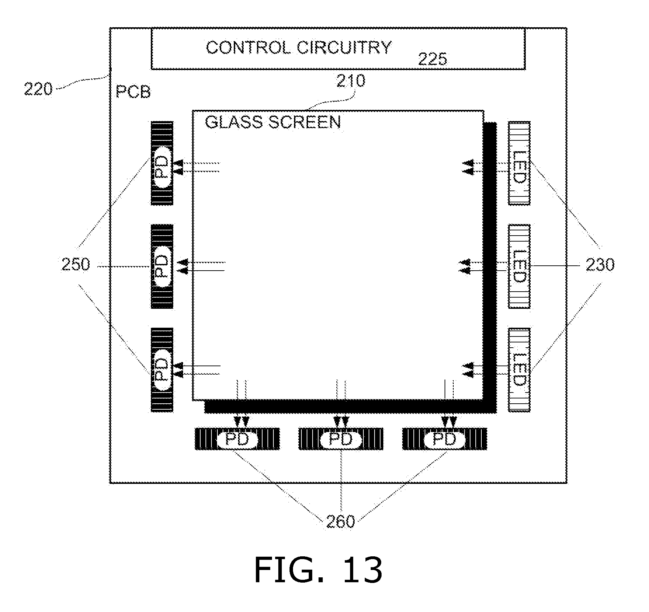

Reference is made to **FIG. 13****,** which is a simplified diagram of a touch screen system responsive to blocked light and reflected light, in accordance with an embodiment of the present invention. Shown in **FIG. 13** is a touch screen system with a glass screen **210,** and a printed circuit board **220** with circuitry **225** for controlling the components mounted on it; namely, a plurality of near infra-red LEDs **230,** a first plurality of PDs **250,** and a second plurality of PDs **260.** Circuitry **225** is operative to generate signals in response to light emitted by LEDs **230** that is blocked from PDs **250** by a pointer touching screen **210,** and in response to light that is reflected by the pointer to PDs **260.**

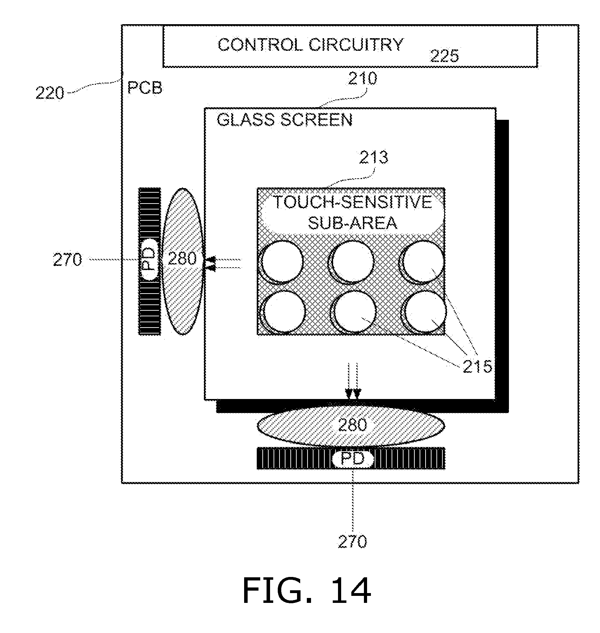

Reference is made to **FIG. 14****,** which is a simplified diagram of a touch screen system with selective area touch aligned with user interface buttons, in accordance with an embodiment of the present invention. Selective area touch refers to a touch screen for which a sub-area of the screen is touch-sensitive, and the remainder of the screen is not touch-sensitive. Generally, selective area touch is used with mid-size and large-size screens, for which it is unnecessary that the entire screen surface area be touch sensitive. The touch screen of **FIG. 14** provides a low cost solution by employing a small number of LEDs and PDs, which are strategically positioned so as to optimize touch detection in the touch sensitive sub-area.

For example, a user interface may include a touch-sensitive keyboard for text input. The location of the keyboard within the screen is designated, and then the LEDs and PDs are positioned so as to be able to detect touches on the keyboard keys. I.e., the LEDs and PDs are aligned to match the user interface. For another example, a user interface may include stylus support for handwriting on a corner of the screen.

The present invention is of particular advantage in providing low cost touch screens with selective area touch. Conventional capacitive and resistive touch screens are costly, since the required screen overlay generally cannot be used to cover only a sub-area of the screen surface. Furthermore, the wiring used in conventional capacitive and resistive touch screens generally traverses the entire screen. As such, for large screens the wires must be large and thick.

In distinction, the present invention is scalable, and the cost of the touch screen is generally proportional to the perimeter of the touch sensitive sub-area. A touch screen, for example, uses only a single LED in a corner of the screen, and PDs along the edges that meet at the corner, for a keypad user interface. The PDs detect light reflected by a pointer touching the screen at one of the keypad buttons, which suffices to determine which button is being touched.

Shown in **FIG. 14** is a touch system with a glass screen **210** including a touch-sensitive sub-area **213** containing an array of buttons **215,** and a printed circuit board **220** with circuitry **225** for controlling a plurality of PDs **270** that are mounted thereon. Also shown in **FIG. 14** are lenses **280** which direct light to PDs **270.**

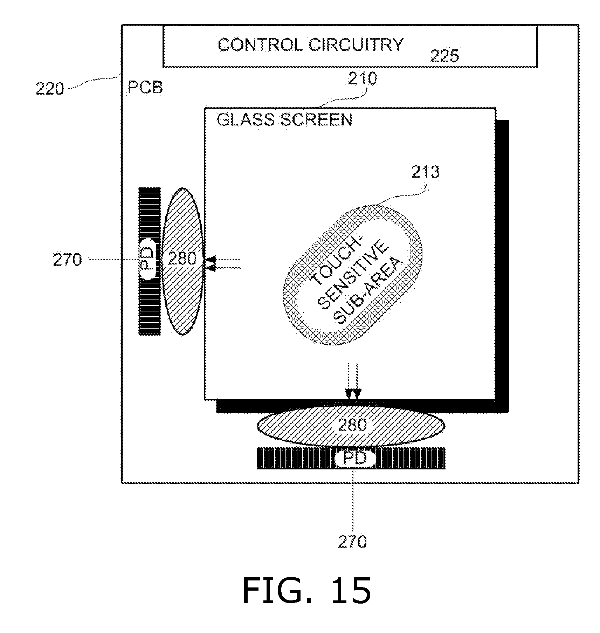

Reference is made to **FIG. 15****,** which is a simplified diagram of another touch screen system with selective area touch, in accordance with an embodiment of the present invention. The touch-sensitive sub-area **213** shown in **FIG. 15** is non-rectangular shaped, and may be designated at will by a user interface designer. PDs **270** are positioned and oriented according to sub-area **213,** such that the touch screen is functional for detecting touches within sub-area **213** but not for detecting touches outside of sub-area **213.**

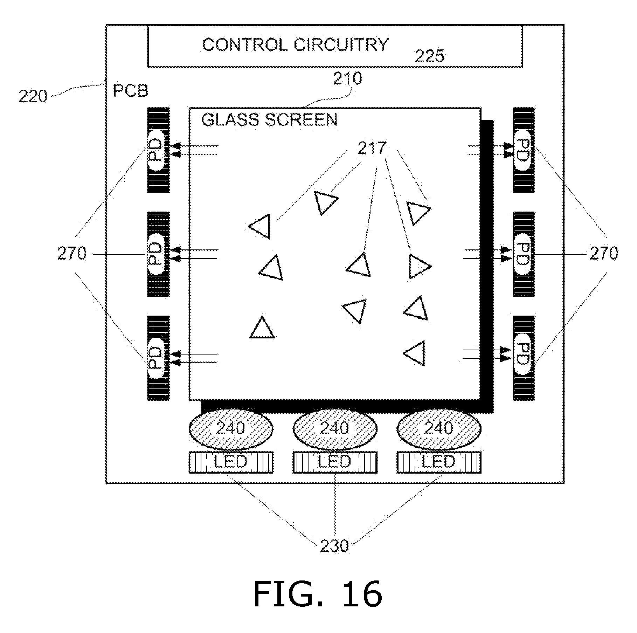

Reference is made to **FIG. 16****,** which is a simplified diagram of a touch screen system with reflective elements embedded in the screen, in accordance with an embodiment of the present invention. Shown in **FIG. 16** is a touch screen with a glass **210** that has reflective elements **217** embedded within the glass, and a printed circuit board **220** with circuitry **225** for controlling components mounted thereon; namely, a plurality of LEDs **230** and a plurality of PDs **270.** Also shown in **FIG. 16** are lenses **240** that direct light emitted by LEDs **230** to reflective elements **217.** When a pointer touches screen **210,** the light reflected by the pointer is detected at PDs **270,** and used to determine the location of the pointer.

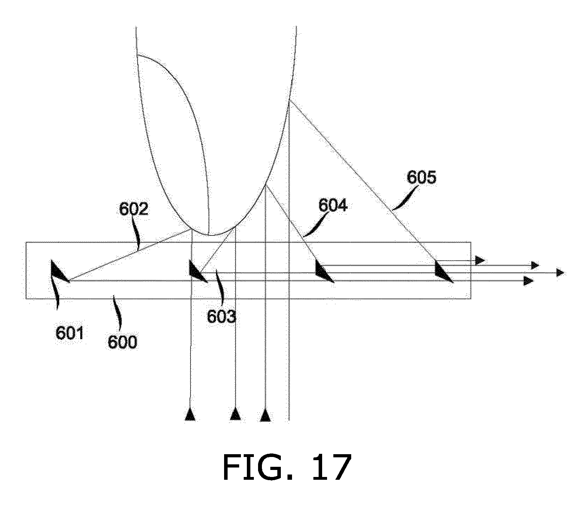

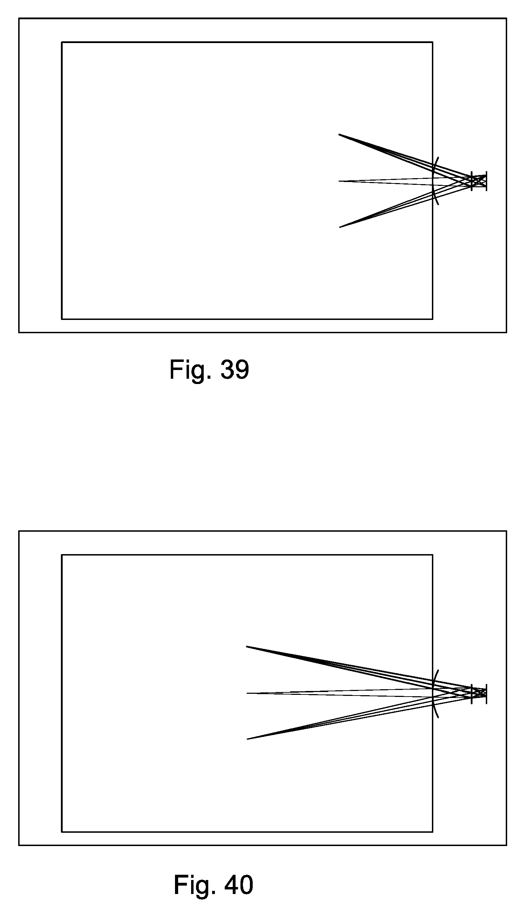

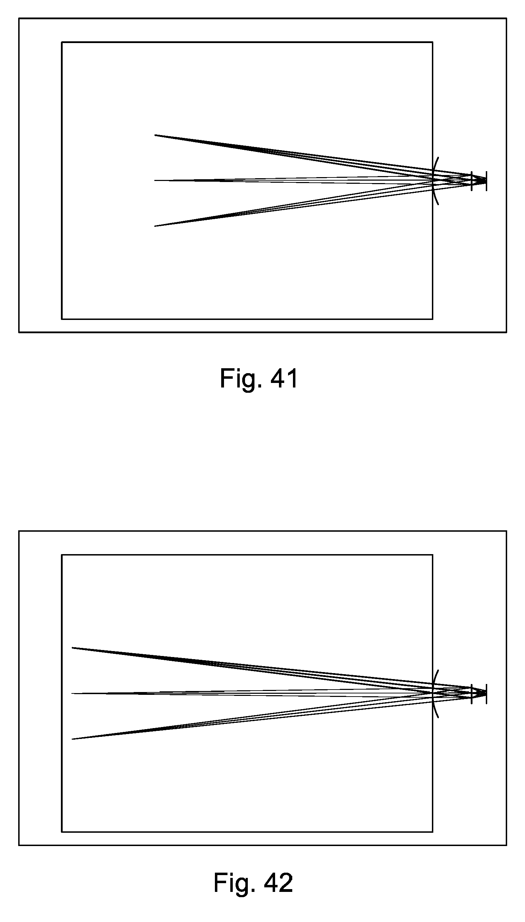

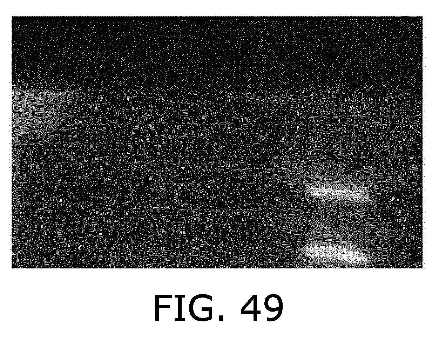

Details of the touch screen system of **FIG. 16** are described hereinbelow with reference to **FIGS. 17 - 48****.** **FIGS. 49 - 51** show test results of simulations of the touch screen system of **FIG. 16****.**

The following touch screen configurations relate to reflective elements that are embedded in a glass front for a touch screen system.

Reference is made to **FIG. 17****,** which is a simplified illustration of a touch screen system with embedded reflective elements, in accordance with an embodiment of the present invention. Shown in **FIG. 17** is a glass **600** with reflective elements **601** embedded therein. Light generated from under glass **600** by a backlight or an organic light emitting diode (OLED) hits a finger, and generates reflected light rays **602, 603, 604** and **605.** The reflected rays are directed by reflective elements **601** through glass **600** to one or more photo detectors.

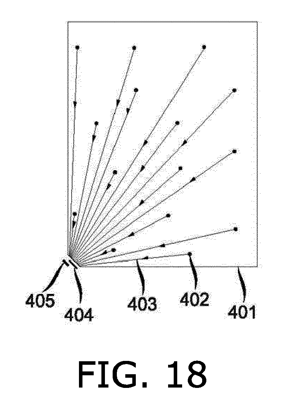

Reference is made to **FIG. 18****,** which is a simplified illustration of a touch screen system with a picture array that reads incoming light from spread locations, in accordance with an embodiment of the present invention. Shown in **FIG. 18** is a glass **401,** an area **402** with embedded reflective elements that break light into glass **401,** directed light **403,** a two-dimensional or three-dimensional picture array **404,** and an additional light source **405.** Light from each reflective element in the screen is projected to a corresponding location on picture array **404,** thereby enabling detection of the location of the reflective element that is being touched, based on the location of the pixel in picture array **404** that detects the touch.

When light emitted by the screen is used to detect the location of a pointer touching the screen, the touch corresponds to an increase in detected light, since the pointer reflects projected light back onto picture array **404** via a reflective element. In distinction, when ambient light is used to detect the location of a pointer touching the screen, the touch corresponds to a decrease in detected light, as the pointer blocks ambient light from being reflected onto picture array **404** via a reflective element.

Alternatively, the image at picture array **404** may be analyzed to locate contours of a pointer touching the screen. In this case, the image at picture array **404** corresponds to an image of the screen surface.

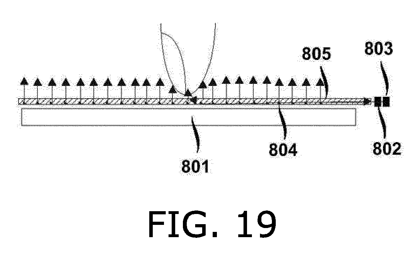

Reference is made to **FIG. 19****,** which is a simplified illustration of light from a pointer being reflected back into the touch screen of **FIG. 18****,** in accordance with an embodiment of the present invention. Shown in **FIG. 19** is a display **801,** a photo detector **802,** an additional light source **803,** embedded reflective elements **804** and a glass front **805** for the display **801.**

Inside glass front **805** are embedded reflective elements that (i) redirect light arriving from light source **803** to project the light above the screen, as indicated by the arrows pointing up in **FIG. 19****,** and (ii) direct light that is reflected by a pointer back into the screen, to photo detector **802.**

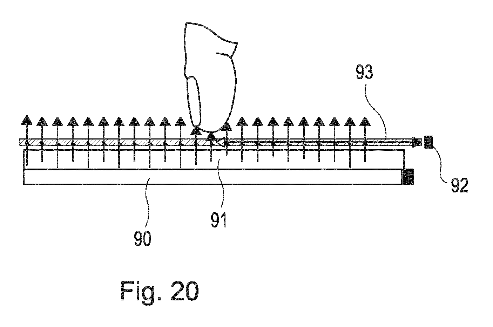

Reference is made to **FIG. 20****,** which is a simplified illustration of light from a display being reflected from a pointer back into the touch screen of **FIG. 18****,** in accordance with an embodiment of the present invention. Shown in **FIG. 20** is a backlight **90,** a display **91,** a photo detector **92** and a protection glass **93.** Embedded inside protection glass **93** are reflective elements that direct light reflected by a pointer back into the screen, to photo detector **92.** The backlight from display **91** is modulated and synchronized with photo detector **92.**

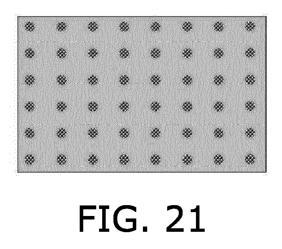

Reference is made to **FIG. 21****,** which is a simplified illustration of a touch screen having detection points with reflective elements embedded in the screen glass, in accordance with an embodiment of the present invention. A screen glass has reflective elements embedded in the glass, shown in **FIG. 21** as dots. The dots are shown organized in the geometry of a lattice. LEDs emitting infra-red or near infra-red light are used as light sources for the touch screen.

The LEDs emit light from the edge of the screen glass through the glass, as described hereinabove with reference to **FIG. 19****.** The light is projected upward by the embedded reflective elements. A pointer reflects the upward projecting light back onto a reflective element, and the reflective element projects the light back onto a light sensor, or onto an image sensor with a two-dimensional pixel array.

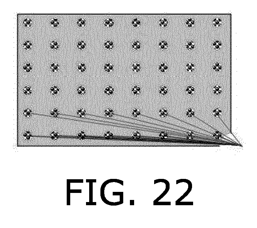

Reference is made to **FIG. 22****,** which is a simplified illustration of a light source positioned at a corner of the touch screen of **FIG. 21** that projects light into the screen glass, in accordance with an embodiment of the present invention. In this embodiment, all of the emitted light beams are generated from the corner of the touch screen, with small angle variations between adjacent beams. As the distance between reflective elements and the light source increases, the angle between light beams directed at neighboring reflective elements decreases. As such, in large screens, such as 13" or 42" screens, the angle between light beams directed at neighboring reflective elements located at the far end of the screen is very small.

Preferably, a two-dimensional or three-dimensional picture array, similar to picture array **404** of **FIG. 18****,** is used here as well. Light from each reflective element in the screen is projected to a corresponding location on the picture array, thus enabling determination of the location of the reflective element being touched based on the location of the pixel in the picture array that detects the touch.

In an alternative embodiment, the light source positioned at the corner of the touch screen is configured to emit successive beams of light individually. As such, only one light beam aimed at one reflective element is generated at any given time. When a pointer reflects the light back onto a light sensor (not shown), the touch screen determines the location of the pointer as corresponding to the location of the single reflective element at which the light beam is aimed.

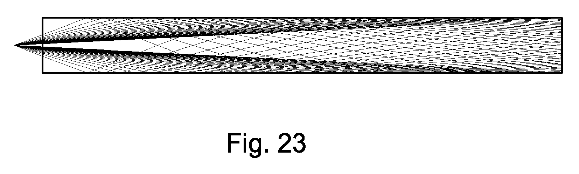

Reference is made to **FIG. 23****,** which is a simplified illustration of a touch screen that serves as a light conductor, for guiding light emitted by an LED, in accordance with an embodiment of the present invention. **FIG. 23** is a side view of a touch screen that acts as a light guide.

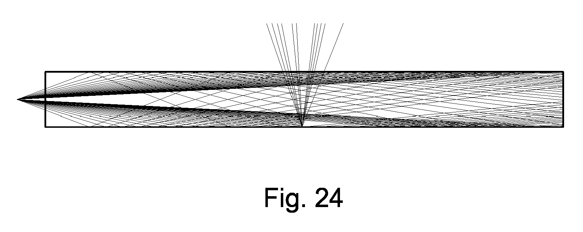

Reference is made to **FIG. 24****,** which is a simplified illustration of the touch screen of **FIG. 23** with microstructures embedded in the glass, in accordance with an embodiment of the present invention. **FIG. 24** shows that microstructures embedded in the bottom of the touch screen leak portions of light through the top surface of the touch screen. Light reflected by a pointer touching the screen is led back into the light guide to a photo detector.

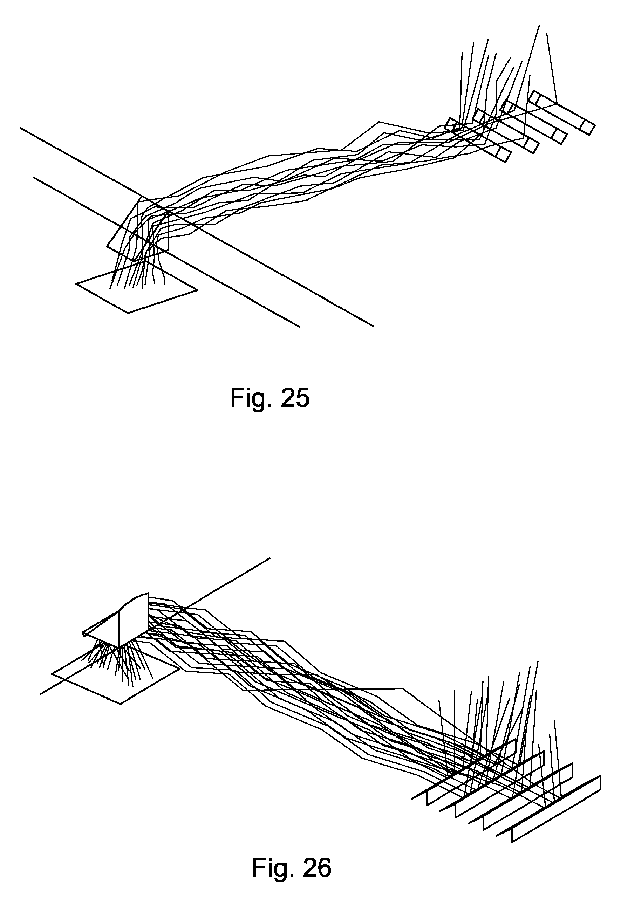

Reference is made to **FIG. 25****,** which is a simplified illustration of reflected light being re-directed by a reflective element embedded in a touch screen and directed towards a photo detector, in accordance with an embodiment of the present invention. As shown in **FIG. 25****,** light reflected from a pointer is guided back into the screen. The light stops at one of the reflective elements embedded in the screen, and is detected by a photo detector below the screen.

Reference is made to **FIG. 26****,** which is a simplified illustration of light that is reflected onto multiple areas of a touch screen and directed towards a photo detector, in accordance with an embodiment of the present invention. As shown in **FIG. 26****,** light reflected onto multiple areas on the screen surface by a pointer is reflected by reflective elements embedded in the screen and directed to a photo detector outside of the screen surface. Thus, light reflected by a pointer is reflected back to a photo detector.

For a lattice spacing of 10 mm between the reflective elements and the photo detector, approximately 0.6% of the light is detected by the photo detector, and for a lattice spacing of 15 mm between the reflective elements and the photo detector, approximately 0.4% of the light is detected by the photo detector. In general, the amount of light detected by the photo detector depends on the size of the photo detector and the optical elements used.

Discussion now turns to a camera chip that is used as a photo detector of a touch screen. The image of the touch screen captured by the camera is used to infer the location of a pointer that touches the touch screen, or approaches the touch screen.

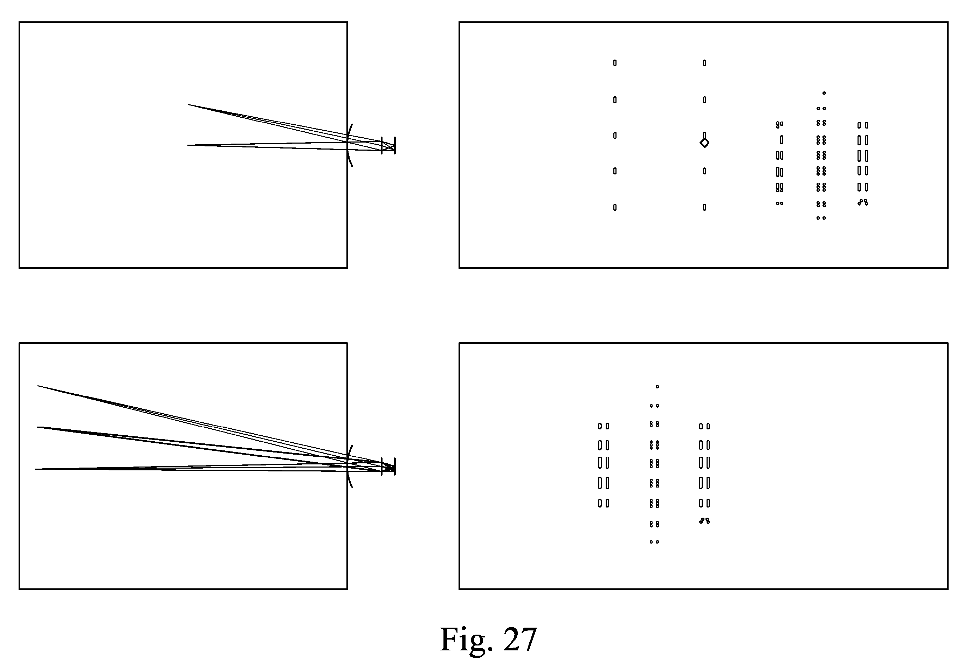

Reference is made to **FIG. 27****,** which is a simplified diagram of the touch screen system of **FIG. 21** with a camera that functions as a photo detector, in accordance with an embodiment of the present invention. To obtain an optimal image on the camera sensor, the camera is oriented at an angle with respect to an edge of the touch screen, and arranged so as to collect light at a wide angle. Generally the surface of the touch screen at which the light exits should be approximately concentric with the camera lens.

In order to minimize lateral angle, it is preferable to mount the camera at a corner of the touch screen. Alternatively, two or more cameras may be used.

When a pointer touches the screen, or approaches the screen, a pattern, such as one of the patterns in **FIG. 27****,** from the reflective elements embedded in the screen is projected to the camera chip. The light pattern on the camera sensor provides information regarding the distance between the camera and the pointer.

The two left portions of **FIG. 27** show the touch screen with reflected light at two different distances from the camera lens. The two right portions of **FIG. 27** show the corresponding patterns on the camera sensor. As shown in **FIG. 27****,** a larger distance between the camera and the pointer corresponds to a larger number of sub-patterns on the camera sensor.

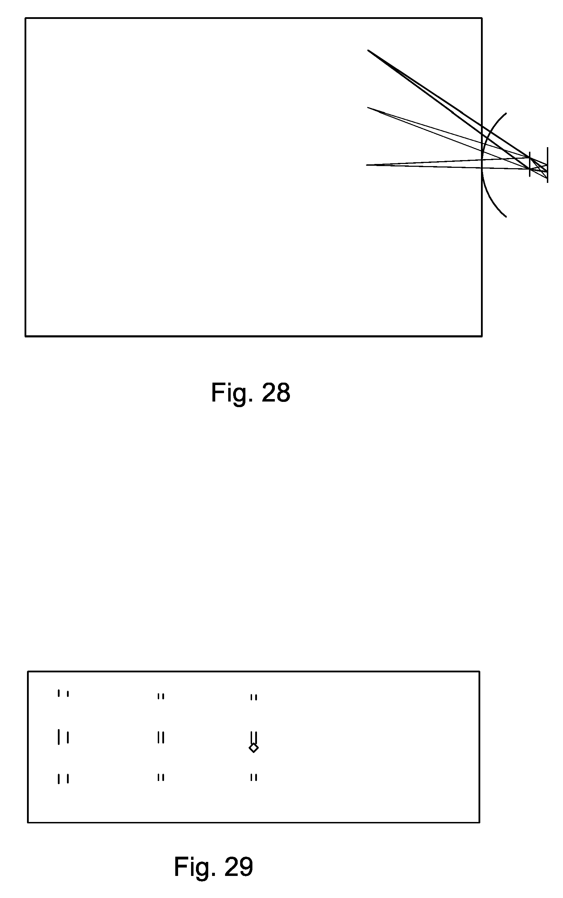

Reference is made to **FIG. 28****,** which is a simplified illustration of a camera lens capturing reflected light from the touch screen of **FIG. 21****,** with the camera 10 mm away from a pointer that is touching the screen, in accordance with an embodiment of the present invention.

Reference is also made to **FIG. 29****,** which is an image captured by the camera of **FIG. 28****,** from three reflective elements spaced 5 mm apart and located 10 mm from the screen edge, in accordance with an embodiment of the present invention.

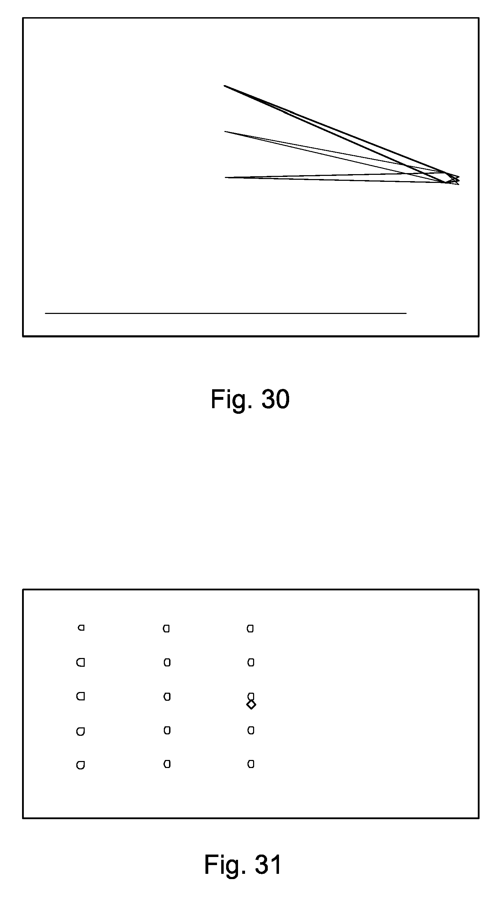

Reference is made to **FIG. 30****,** which is a simplified illustration of a camera lens capturing reflected light from the touch screen of **FIG. 21****,** with the camera 20 mm away from a pointer that is touching the screen, in accordance with an embodiment of the present invention.

Reference is also made to **FIG. 31****,** which is an image captured by the camera of **FIG. 30****,** from three reflective elements spaced 5 mm apart and located 20 mm from the screen edge, in accordance with an embodiment of the present invention.

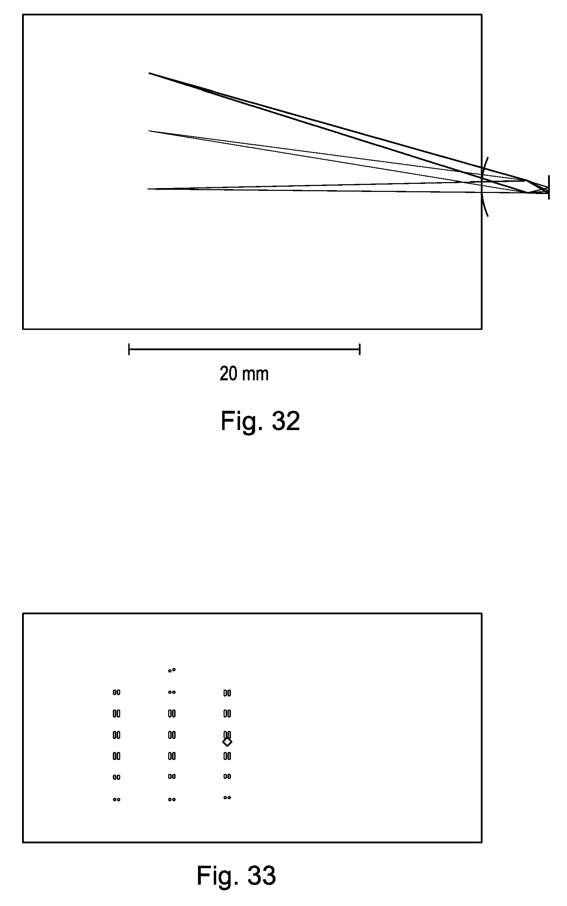

Reference is made to **FIG. 32****,** which is a simplified illustration of a camera lens capturing reflected light from the touch screen of **FIG. 21****,** with the camera 30 mm away from a pointer that is touching the screen, in accordance with an embodiment of the present invention.

Reference is also made to **FIG. 33****,** which is an image captured by the camera of **FIG. 32****,** from three reflective elements spaced 5 mm apart and located 30 mm from the screen edge, in accordance with an embodiment of the present invention.

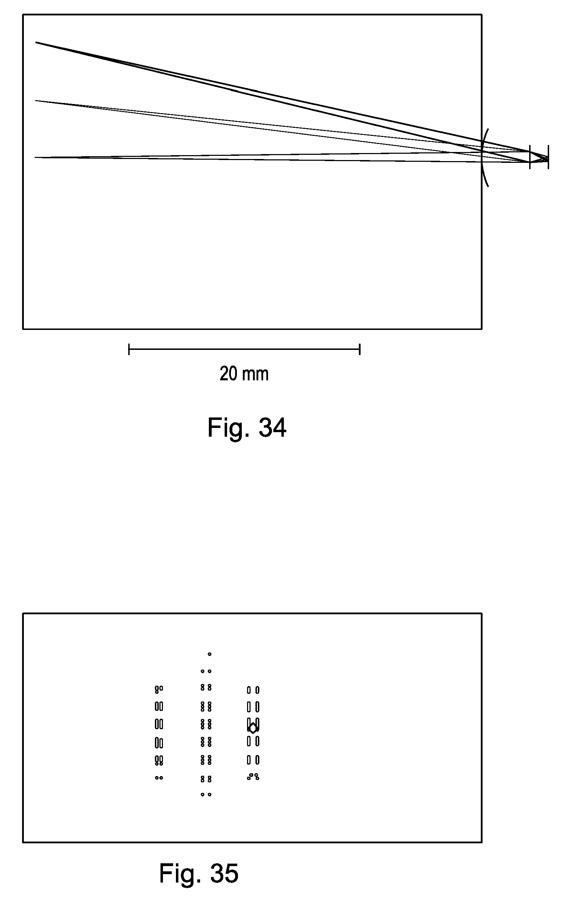

Reference is made to **FIG. 34****,** which is a simplified illustration of a camera lens capturing reflected light from the touch screen of **FIG. 21****,** with the camera 39 mm away from a pointer that is touching the screen, in accordance with an embodiment of the present invention.

Reference is also made to **FIG. 35****,** which is an image captured by the camera of **FIG. 34****,** from three reflective elements spaced 5 mm apart and located 39 mm from the screen edge, in accordance with an embodiment of the present invention. By comparing the respective captured images in **FIGS. 29****,** **31****,** **33** and **35****,** it will be appreciated that the number of sub-patterns in the images corresponds to the distance between the pointer and the camera lens.

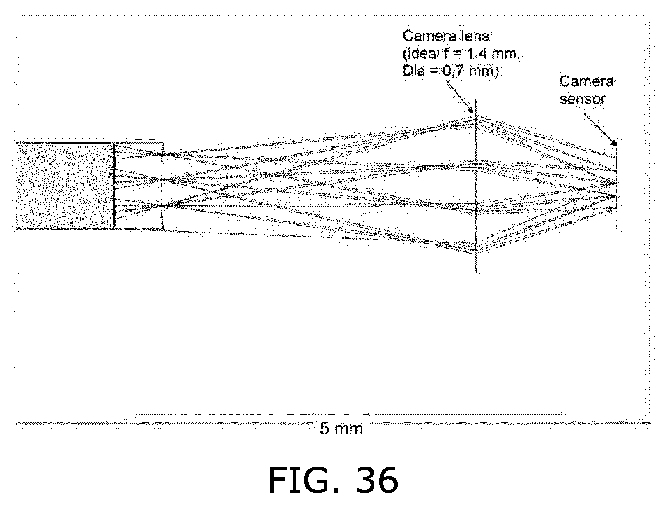

Reference is made to **FIG. 36****,** which is a simplified diagram of a side view showing the sub-patterns in the camera sensor generated from the embedded reflective elements, in accordance with an embodiment of the present invention. In the configuration of **FIGS. 28****,** **30****,** **32** and **34****,** a light source, along an edge of the display screen that is 1 mm thick, is 20 mm away from the camera lens. For such a configuration, five sub-patterns are generated on the camera sensor; namely a central sub-pattern corresponding to an image directly in the center, and two sub-patterns corresponding to reflected images on each side of the central sub-pattern. The sub-patterns correspond to focuses of light from different depths of field; i.e., from different distances at different positions along the beam direction. Shorter focus distances generate fewer but larger sub-patterns, and longer focus distances generate more but smaller sub-patterns. As such, longer focus distances are preferable, as it is easier for a system to count the number of elements than to measure the size of an element.

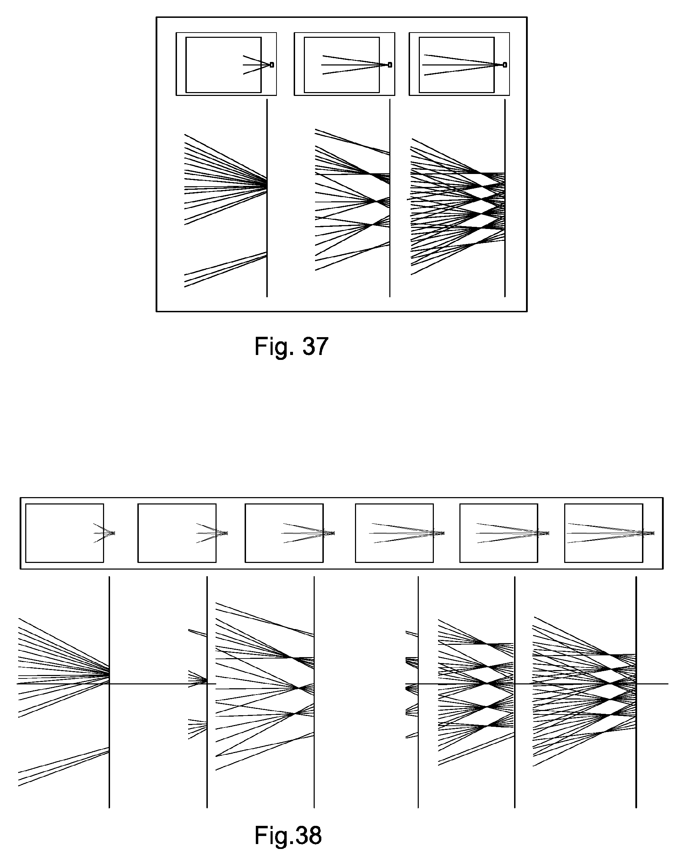

Reference is made to **FIGS. 37 - 43****,** which are images of light beams reflected from three different pointer touch locations, in accordance with an embodiment of the present invention. The three top portions of **FIG. 37** show the actual camera sensor images, and the three bottom portions of **FIG. 37** show the corresponding optics between the camera lens and the camera sensor. The rightmost portion shows six sub-patterns in the image on the camera sensor, corresponding to a pointer touch location that is far from the camera lens.

Discussion now turns to a light sensor that is used as a photo detector of a touch screen. The advantage of a light sensor over a camera is a larger sensor area that may be used for light detection. The LEDs and light sensors may be frequency modulated in order to improve detection sensitivity.

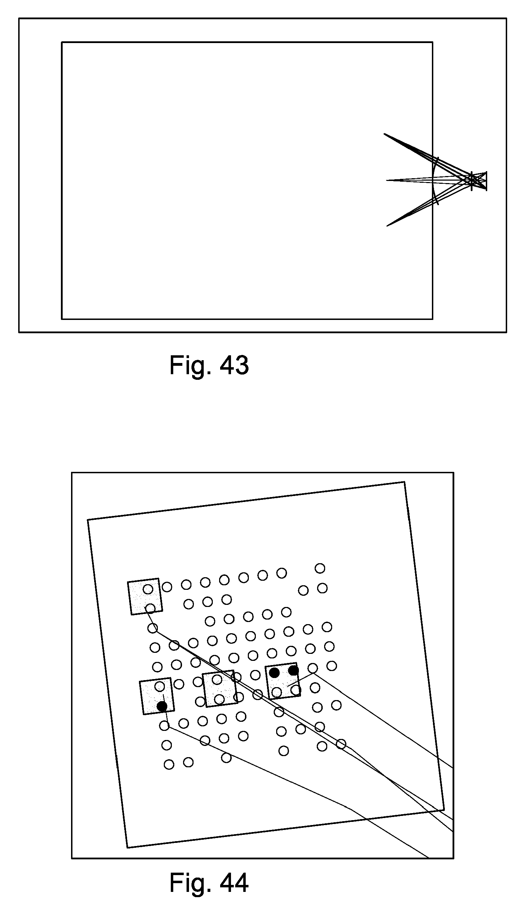

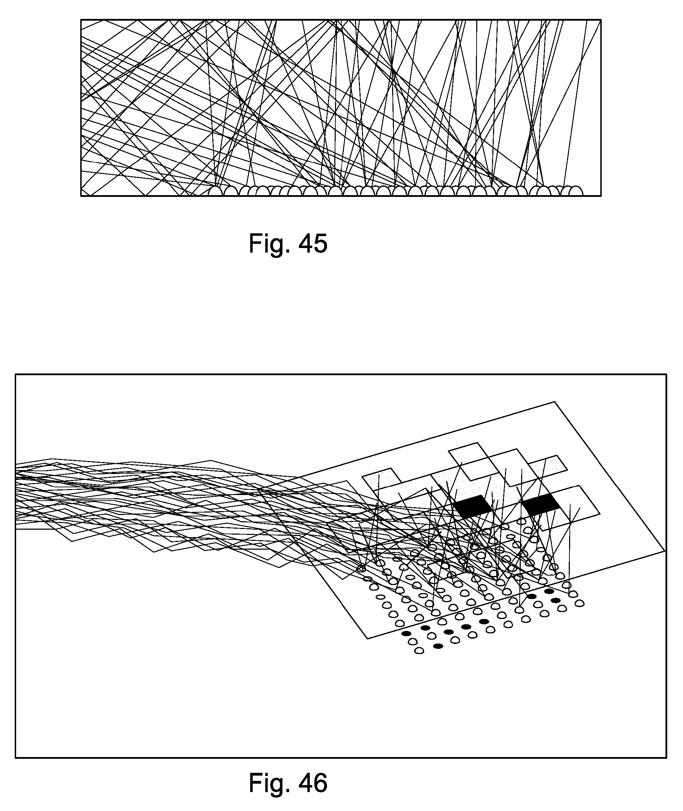

Reference is made to **FIGS. 44 - 46****,** which are simplified illustrations of a simulation of light at multiple points on a touch screen, at which reflective elements are embedded, in accordance with an embodiment of the present invention. Shown in **FIG. 44** are circular dots on the touch screen, representing embedded reflective elements. As shown in **FIG. 45****,** the circular dots have a relative fill factor of 20%, and the pixel dimensions for the touch screen are approximately 3 mm x 3 mm.

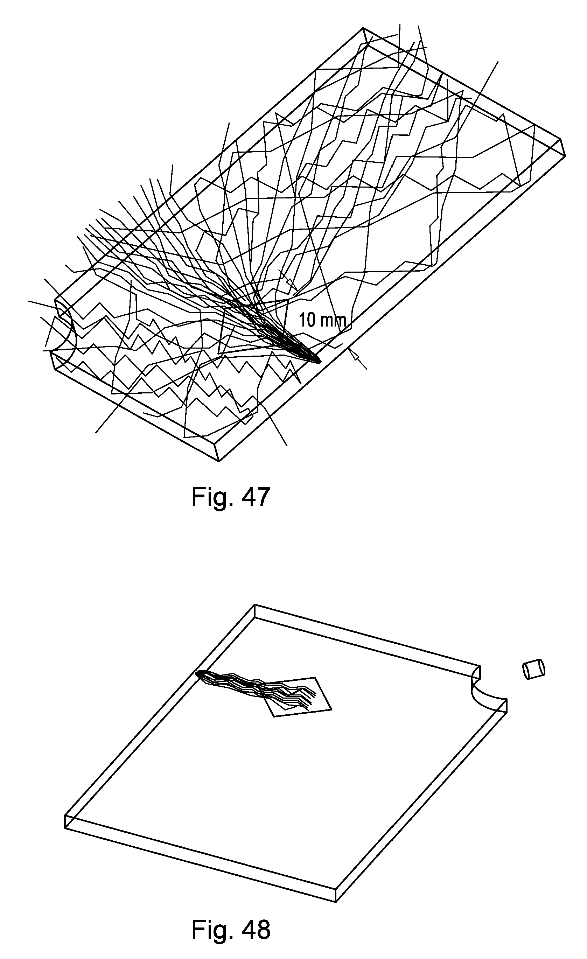

Reference is made to **FIGS. 47** and **48****,** which are simplified illustrations of light emitted from an LED lighting up a fingertip of 4 mm x 4 mm, for the touch screen of **FIG. 44****,** in accordance with an embodiment of the present invention. The distance between the LED and the area occupied by the reflective elements is approximately 10 mm. Approximately 3% of the incoming light from the LED lights up the fingertip. The darker lines in **FIG. 47** represent light that escapes from the glass, and the lighter lines represent light inside the glass. **FIG. 47** shows light escaping from the glass surface at a dot location that is 10 mm away from the LED, indicated by a white diamond.

**FIG. 48** shows only those light beams that reach the dot location. The small box shown at the upper right corner of **FIG. 48** represents a camera that captures the reflected light.

Reference is made to **FIGS. 49 - 51****,** which are images of test results captured by a camera for the touch screen of **FIG. 44****,** in accordance with an embodiment of the present invention. The tests used a large screen display of dimensions 30 mm x 40 mm and 1 mm thickness. The tests used simple light guides, of 5 mm thickness. The tests are based on a camera lens with focal length f = 1.4 mm and a diameter of 0.7 mm. The tests were simulated from three points on the touch screen at different distances from the camera lens.

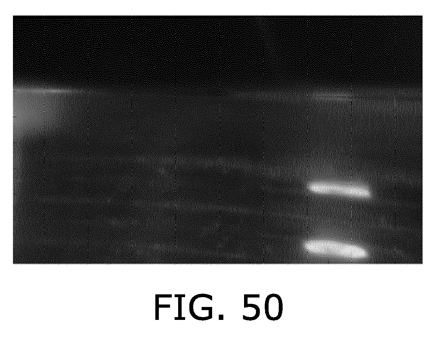

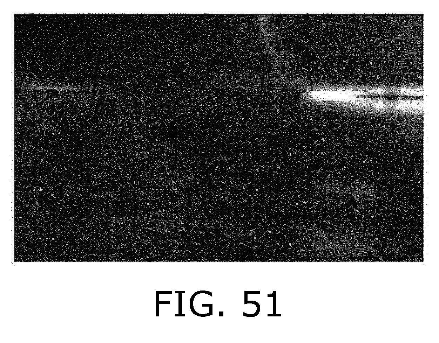

The images shown in **FIGS. 49 - 51** were captured using a mobile phone camera. **FIG. 49** shows an ambient state, where no pointer is touching the screen, and **FIG. 50** shows a state where a pointer is touching the screen. **FIG. 51** shows the results when the image of **FIG. 49** is subtracted from the image of **FIG. 50****,** and the difference is scaled up by a factor of 10.

The distance of the pointer from the camera lens may be determined from the number of sub-patterns in the captured images and their positions. The positions of the sub-patterns determine the direction from which the light arrives.

The present invention has broad application to electronic devices with touch sensitive screens, including small-size, mid-size and large-size screens. Such devices include inter alia computers, home entertainment systems, car entertainment systems, security systems, PDAs, cell phones, electronic games and toys, digital photo frames, digital musical instruments, e-book readers, TVs and GPS navigators.

In the foregoing specification, the invention has been described with reference to specific exemplary embodiments thereof. It will, however, be evident that various modifications and changes may be made to the specific exemplary embodiments without departing from the broader scope of the invention as set forth in the appended claims. Accordingly, the specification and drawings are to be regarded in an illustrative rather than a restrictive sense.

## Claims

1. A touch screen system, comprising:
a single-layer near-infrared transparent screen glass (93, 401, 600) comprising:
a plurality of reflective elements (217, 601) embedded inside therein for reflecting infrared light; and
an upper surface exposed for touch by an object from outside the touch screen system;
a circuit board (220) comprising circuitry (225) for controlled selective activation of electronic components connected thereto;
at least one light source (90, 230, 405) connected to said circuit board, for emitting infrared light into said screen glass, a portion of which is reflected back into said screen glass by the object when it is positioned above or on said upper surface of said screen glass, and further reflected within said screen glass by some of said reflective elements;
at least one light detector (92, 270) connected to said circuit board, for detecting the further reflected light, wherein said at least one light source emits infrared light into said screen glass in a direction opposite to a direction of detection of reflected light by the at least one light detector; and
a calculating unit connected to said at least one light detector (92, 270) for determining one or more locations on said upper surface of said screen glass above which or on which the object is positioned, based on amounts of light detected by said at least one light detector.

2. The touch screen system of claim **1** further comprising at least one optical element (240) for guiding the light emitted by said at least one light source towards said reflective elements.

3. The touch screen system of claim **1** or **2** further comprising at least one optical element (280) for guiding the further reflected light to said at least one light detector.

4. The touch screen system of claim **2** or **3** wherein said at least one optical element (240, 280) comprises an elliptical mirror.

5. The touch screen system of claim **2, 3** or **4** wherein said at least one optical element (240, 280) is configured to break an incoming cone of light into separate light beams.

6. The touch screen system of claim **5** wherein said at least one optical element (240, 280) is configured to reflect the separate light beams into substantially parallel light beams.

7. The touch screen system of one of the claims **1** to **6** wherein said embedded reflective elements (217, 601) are wedge-shaped or concave or convex.

8. The touch screen system of one of the claims **1** to **7** wherein said at least one light detector (92, 270) comprises at least one camera or at least one photo detector.

9. The touch screen system of one of the claims **1** to **8** wherein said at least one light source (90, 230, 405) is placed underneath said screen glass.

10. The touch screen system of one of the claims **1** to **9** wherein said at least one light detector (92, 270) is placed underneath said screen glass.

11. A method for determining a location of an object relative to a screen surface, wherein the screen surface comprises a single-layer near-infrared transparent screen glass (93, 401, 600) comprising a plurality of reflective elements (217, 601) embedded inside therein for reflecting infrared light, and an upper surface that is exposed for touch by an object from outside the screen, and wherein at least one light source (405) emits infrared light into the screen glass, a portion of which is reflected back into the screen glass by the object when it is positioned above or on the upper surface of the screen glass, and further reflected within the screen glass by some of the reflective elements, comprising:
capturing images of the further reflected light, by a picture array (404), wherein said at least one light source emits infrared light into said screen glass in a direction opposite to a direction of detection of reflected light by the at least one light detector; and
determining the location of the object relative to the screen surface, based on light patterns in the captured images.

12. The method of claim **11** wherein at least one of the captured images includes a plurality of sub-patterns representing the object, and wherein said determining determines a distance between the picture array (404) and the object based on the number of sub-patterns.

13. The method of claim **12** wherein said determining determines the distance between the picture array (404) and the object based on sizes of the sub-patterns.

14. The method of claim **11, 12** or **13** further comprising:
capturing images of ambient light, by the picture array (404); and
subtracting pixel values in at least one of the images of ambient light from corresponding pixel values in at least one of the images of the further reflected light, wherein said determining determines the location of the object relative to the screen surface based on the subtracted pixel values.

## Patentansprüche

1. Berührungsbildschirmsystem, umfassend:
ein einschichtiges transparentes Nah-Infrarot-Bildschirmglas (93, 401, 600), umfassend:
eine Mehrzahl von reflektierenden Elementen (217, 601) darin eingebettet zum Reflektieren von Infrarotlicht; und
eine obere Oberfläche, die für Berührung durch ein Objekt von außerhalb des Berührungsbildschirmsystems exponiert ist;
eine Leiterplatte (220), die Schaltungsanordnung (225) umfasst, für kontrollierte selektive Aktivierung von elektronischen Komponenten, die damit verbunden sind;
mindestens eine Lichtquelle (90, 230, 405), die mit der Leiterplatte verbunden ist, zum Ausstrahlen von Infrarotlicht in das Bildschirmglas, wobei ein Teil davon durch das Objekt in das Bildschirmglas zurück reflektiert wird, wenn es über oder auf der oberen Oberfläche des Bildschirmglases positioniert ist, und ferner innerhalb des Bildschirmglases durch einige der reflektierenden Elemente reflektiert wird;
mindestens einen Lichtdetektor (92, 270) der mit der Leiterplatte verbunden ist, zum Detektieren des ferner reflektierten Lichts, wobei die mindestens eine Lichtquelle Infrarotlicht in einer Richtung entgegengesetzt zu einer Richtung der Detektion von reflektiertem Licht durch den mindestens einen Lichtdetektor in das Bildschirmglas ausstrahlt; und
eine Berechnungseinheit, die mit dem mindestens einen Lichtdetektor (92, 270) verbunden ist, zum Bestimmen einer oder mehrerer Stellen auf der oberen Oberfläche des Bildschirmglases, über welcher oder auf welcher das Objekt positioniert ist, basierend auf Mengen von Licht, die durch den mindestens einen Lichtdetektor detektiert werden.

2. Berührungsbildschirmsystem nach Anspruch 1, ferner umfassend mindestens ein optisches Element (240) zum Leiten des von der mindestens einen Lichtquelle ausgestrahlten Lichts zu den reflektierenden Elementen.

3. Berührungsbildschirmsystem nach Anspruch 1 oder 2, ferner umfassend mindestens ein optisches Element (280) zum Leiten des ferner reflektierten Lichts zu dem mindestens einen Lichtdetektor Elementen.

4. Berührungsbildschirmsystem nach Anspruch 2 oder 3, wobei das mindestens eine optische Element (240, 280) einen elliptischen Spiegel umfasst.

5. Berührungsbildschirmsystem nach Anspruch 2, 3 oder 4, wobei das mindestens eine optische Element (240, 280) so konfiguriert ist, dass es einen eingehenden Lichtkegel in getrennte Lichtstrahlen bricht.

6. Berührungsbildschirmsystem nach Anspruch 5, wobei das mindestens eine optische Element (240, 280) so konfiguriert ist, dass es die getrennten Lichtstrahlen in im Wesentlichen parallele Lichtstrahlen reflektiert.

7. Berührungsbildschirmsystem nach einem der Ansprüche 1 bis 6, wobei die eingebetteten reflektierenden Elemente (217, 601) keilförmig oder konkav oder konvex sind.

8. Berührungsbildschirmsystem nach einem der Ansprüche 1 bis 7, wobei der mindestens eine Lichtdetektor (92, 270) mindestens eine Kamera oder mindestens einen Fotodetektor umfasst.

9. Berührungsbildschirmsystem nach einem der Ansprüche 1 bis 8, wobei die mindestens eine Lichtquelle (90, 230, 405) unterhalb des Bildschirmglases angeordnet ist.

10. Berührungsbildschirmsystem nach einem der Ansprüche 1 bis 9, wobei der mindestens eine Lichtdetektor (92, 270) unterhalb des Bildschirmglases angeordnet ist.

11. Verfahren zur Bestimmung einer Stelle eines Objekts in Bezug auf eine Bildschirmoberfläche, wobei die Bildschirmoberfläche ein einschichtiges transparentes Nah-Infrarot-Bildschirmglas (93, 401, 600) umfasst, das eine Mehrzahl von reflektierenden Elementen (217, 601) darin eingebettet zum Reflektieren von Infrarotlicht und eine obere Oberfläche umfasst, die für Berührung durch ein Objekt von außerhalb des Bildschirms exponiert ist, und wobei mindestens eine Lichtquelle (405) Infrarotlicht in das Bildschirmglas ausstrahlt, von welchem ein Teil durch das Objekt in das Bildschirmglas zurück reflektiert wird, wenn es über oder auf der oberen Oberfläche des Bildschirmglases positioniert ist, und ferner innerhalb des Bildschirmglases durch einige der reflektierenden Elemente reflektiert wird, umfassend:
Erfassen von Bildern des ferner reflektierten Lichts durch ein Bild-Array (404), wobei die mindestens eine Lichtquelle Infrarotlicht in einer Richtung entgegengesetzt zu einer Richtung der Detektion von reflektiertem Licht durch den mindestens einen Lichtdetektor in das Bildschirmglas ausstrahlt; und
Bestimmen der Stelle des Objekts in Bezug auf die Bildschirmoberfläche basierend auf Lichtmustern in den erfassten Bildern.

12. Verfahren nach Anspruch 11, wobei mindestens eines der erfassten Bilder eine Mehrzahl von Teilmustern aufweist, die das Objekt darstellen, und wobei das Bestimmen einen Abstand zwischen dem Bild-Array (404) und dem Objekt basierend auf der Anzahl von Teilmustern bestimmt.

13. Verfahren nach Anspruch 12, wobei das Bestimmen den Abstand zwischen dem Bild-Array (404) und dem Objekt basierend auf Größen der Teilmuster bestimmt.

14. Verfahren nach Anspruch 11, 12 oder 13, ferner umfassend:
Erfassen von Bildern von Umgebungslicht durch das Bild-Array (404); und
Subtrahieren von Pixelwerten in mindestens einem der Bilder von Umgebungslicht von entsprechenden Pixelwerten in mindestens einem der Bilder des ferner reflektierten Lichts, wobei das Bestimmen die Stelle des Objekts in Bezug auf die Bildschirmoberfläche basierend auf den subtrahierten Pixelwerten bestimmt.

## Revendications

1. Système d'écran tactile, comprenant :
un verre d'écran transparent aux proches infrarouges à couche unique (93, 401, 600) comprenant :
une pluralité d'éléments de réflexion (217, 601) intégrés à l'intérieur de celui-ci pour réfléchir la lumière infrarouge ; et
une surface supérieure exposée pour un contact par un objet à partir de l'extérieur du système d'écran tactile ;
une carte de circuit (220) comprenant des éléments de circuit (225) pour une activation sélective commandée de composants électroniques connectés à celle-ci ;
au moins une source de lumière (90, 230, 405) connectée à ladite carte de circuit, pour émettre une lumière infrarouge dans ledit verre d'écran, dont une partie est rétroréfléchie dans ledit verre d'écran par l'objet lorsqu'il est positionné au-dessus de ou sur ladite surface supérieure dudit verre d'écran, et réfléchie davantage dans ledit verre d'écran par certains desdits éléments de réflexion ;
au moins un détecteur de lumière (92, 270) connecté à ladite carte de circuit, pour détecter la lumière réfléchie davantage, dans lequel ladite au moins une source de lumière émet une lumière infrarouge dans ledit verre d'écran dans une direction opposée à une direction de détection de la lumière réfléchie par ledit au moins un détecteur de lumière ; et
une unité de calcul connectée au dit au moins un détecteur de lumière (92, 270) pour déterminer un ou plusieurs emplacements sur ladite surface supérieure dudit verre d'écran au-dessus desquels ou sur lesquels l'objet est positionné, sur la base des quantités de lumière détectées par ledit au moins un détecteur de lumière.

2. Système d'écran tactile selon la revendication 1, comprenant en outre au moins un élément optique (240) pour guider la lumière émise par ladite au moins une source de lumière vers lesdits éléments de réflexion.

3. Système d'écran tactile selon la revendication 1 ou 2, comprenant en outre au moins un élément optique (280) pour guider la lumière réfléchie davantage vers ledit au moins un détecteur de lumière.

4. Système d'écran tactile selon la revendication 2 ou 3, dans lequel ledit au moins un élément optique (240, 280) comprend un miroir elliptique.

5. Système d'écran tactile selon la revendication 2, 3 ou 4, dans lequel ledit au moins un élément optique (240, 280) est configuré pour diviser un cône entrant de lumière en des faisceaux de lumière séparés.

6. Système d'écran tactile selon la revendication 5, dans lequel ledit au moins un élément optique (240, 280) est configuré pour réfléchir les faisceaux de lumière séparés en des faisceaux de lumière sensiblement parallèles.

7. Système d'écran tactile selon l'une des revendications 1 à 6, dans lequel lesdits éléments de réflexion intégrés (217, 601) ont une forme de coin ou concave ou convexe.

8. Système d'écran tactile selon l'une des revendications 1 à 7, dans lequel ledit au moins un détecteur de lumière (92, 270) comprend au moins une caméra ou au moins un photodétecteur.

9. Système d'écran tactile selon l'une des revendications 1 à 8, dans lequel ladite au moins une source de lumière (90, 230, 405) est placée au-dessous dudit verre d'écran.

10. Système d'écran tactile selon l'une des revendications 1 à 9, dans lequel ledit au moins un détecteur de lumière (92, 270) est placé au-dessous dudit verre d'écran.

11. Procédé pour déterminer un emplacement d'un objet par rapport à une surface d'écran, dans lequel la surface d'écran comprend un verre d'écran transparent aux proches infrarouges à couche unique (93, 401, 600) comprenant une pluralité d'éléments de réflexion (217, 601) intégrés à l'intérieur de celui-ci pour réfléchir la lumière infrarouge, et une surface supérieure qui est exposée pour un contact par un objet à partir de l'extérieur de l'écran, et dans lequel au moins une source de lumière (405) émet une lumière infrarouge dans le verre d'écran, dont une partie est rétroréfléchie dans le verre d'écran par l'objet lorsqu'il est positionné au-dessus de ou sur la surface supérieure du verre d'écran, et réfléchie davantage dans le verre d'écran par certains des éléments de réflexion, comprenant :
la capture d'images de la lumière réfléchie davantage, par un réseau d'image (404), dans lequel ladite au moins une source de lumière émet une lumière infrarouge dans ledit verre d'écran dans une direction opposée à une direction de détection de la lumière réfléchie par ledit au moins un détecteur de lumière ; et
la détermination de l'emplacement de l'objet par rapport à la surface d'écran, sur la base des motifs de lumière dans les images capturées.

12. Procédé selon la revendication 11, dans lequel au moins l'une des images capturées comprend une pluralité de de motifs secondaires représentant l'objet, et dans lequel ladite détermination détermine une distance entre le réseau d'image (404) et l'objet sur la base du nombre de motifs secondaires.

13. Procédé selon la revendication 12, dans lequel ladite détermination détermine la distance entre le réseau d'image (404) et l'objet sur la base des tailles des motifs secondaires.

14. Procédé selon la revendication 11, 12 ou 13, comprenant en outre :
la capture d'images de lumière ambiante, par le réseau d'image (404) ; et
la soustraction des valeurs de pixel dans au moins l'une des images de lumière ambiante des valeurs de pixels correspondantes dans au moins l'une des images de la lumière réfléchie davantage, dans lequel ladite détermination détermine l'emplacement de l'objet par rapport à la surface d'écran sur la base des valeurs de pixel soustraites.
